# EUROPEAN PATENT APPLICATION

(11) **EP 3 905 120 A1**
(43) Date of publication of application: **03.11.2021**
(21) Application number: 21170507.4
(22) Date of filing: 26.04.2021
(51) Int. Cl.: G06K 9/00, G06K 9/03, G06K 9/46, G06K 9/62

(54) **QUALITY CHECK METHOD AND SYSTEM FOR DETERMINING A RECOGNITION QUALITY OF AN INPUT FACE IMAGE**

(30) Priority: 27.04.2020 NL 2025430
(71) Applicant: 20Face B.V., 7521 AN Enschede (NL)
(72) Inventor: ZENG, Dan, 7522 NM ENSCHEDE (NL); ALI, Tauseef, 7522 DE ENSCHEDE (NL); VELDHUIS, Raymond Nicolaas Johan, 7211 ME EEFDE (NL); ARENDSEN, Albert Rikus Johannes, 7326 DM APELDOORN (NL)
(74) Representative: Arnold & Siedsma

(57) **Abstract**

Computer-implemented quality check method for determining a recognition quality of an input face image, wherein the recognition quality is representative for a probability that a face in the input face image will be correctly recognized during identity recognition, the quality check method comprising following steps: determining at least one feature vector of the input face image by performing a feature extraction of the input face image based on a first convolutional neural network; determining a recognition quality of the input image based on the determined at least one feature vector and a second convolutional neural network; determining whether or not to perform identity recognition of the input face image based on the determined recognition quality and a predefined quality threshold; and if it is determined to perform identity recognition, performing identity recognition of the input face image based on the determined at least one feature vector.

## Description

### Field of Invention

The field of the invention relates to a computer-implemented quality check method and a quality check system for determining a recognition quality of an input face image. Particular embodiments relate to a quality check method and system for determining a recognition quality of an input face image, wherein the recognition quality is representative for a probability that a face in the input face image will be correctly recognized during identity recognition.

### Background

Conventional methods for image quality checks for face recognition utilise a variety of parameter of input face images such as a size of the detected face in pixels, a completeness of the detected face in the image, pose, sharpness, underexposure, overexposure, and color of the detected face. Individual thresholds are set in view of each of these quality check parameters. For example, the size threshold for the face image is determined believing that the smaller size of the face image reduces the recognition capability of a face recognition system. The height and/or width in pixels of the face must satisfy the threshold set by a human operator. The completeness check is applied in order to make sure that all parts of the face such as chin and forehead are included in the image and to confirm that the face image is not located on the border of the image. The pose of the detected face, including roll, pitch, and yaw angels, is considered to highly affect the accuracy of the face recognition system. The strict threshold is applied to select a face image with a nearly frontal pose in the image for further processing by the face recognition system. In a similar manner, blurred, black and white, and/or overexposed face input images are also filtered out by some checks. These checks process pixel intensities to quantify the blur, sharpness, color and/or lighting content in the face image, often in accordance with human visual perception.

Based on one of more of the above identified image parameters a plurality of quality checks and associated thresholds are determined in conventional methods. However, such quality checks are subjective and lead to suboptimal results since although the face images may fail the quality check, they may not fail to be recognized during identity recognition. There is a possibility that a face image may fail one or more of such parameter based quality checks and yet still can be successfully recognized during identity recognition.

### Summary

The object of embodiments of the present invention is to provide a quality check method which is more robust than conventional methods. More in particular, the object of embodiments of the present invention is to provide a quality check method and system which increases accuracy and speed of automated identity recognition.

According to a first aspect of the present invention there is provided a computer-implemented quality check method for determining a recognition quality of an input face image, wherein the recognition quality is representative for a probability that a face in the input face image will be correctly recognized during identity recognition. The quality check method comprises a step of determining at least one feature vector of the input face image by performing a feature extraction of the input face image based on a first convolutional neural network. The quality check further comprises a step of determining a recognition quality of the input image based on the determined at least one feature vector and a second convolutional neural network, and a step of determining whether or not to perform identity recognition of the input face image based on the determined recognition quality and a predefined quality threshold. The quality check further comprises a step of performing identity recognition of the input face image based on the determined at least one feature vector if it is determined to perform identity recognition.

Embodiments of the present invention are based *inter alia* on the insight that by determining a feature vector of the input face image and using this feature vector, in stead of the entire input face image, to determine a recognition quality, less data is processed as compared to conventional methods. In this manner the speed of the quality check, and consequently of an identity recognition is increased. In addition, an accuracy of the quality check is improved by determining the recognition quality in an objective manner. More in particular, by inputting the feature vector to the trained second convolutional neural network a recognition quality can be determined which is representative for a probability that a face in the input face image will be correctly recognized during identity recognition, thereby eliminating subjective, visual and/or human influence on the quality check.

Preferably, determining whether or not to perform identity recognition of the input face image comprises determining to perform identity recognition of the input image, if the determined recognition quality is equal to or higher than the predefined quality threshold, or determining not to perform identity recognition of the input image, if the determined recognition quality is lower than the predefined quality threshold.

Preferably, performing identity recognition of the input face image comprises determining a similarity score which is representative for a similarity between the input face image and enrolled face images.

Preferably, the similarity score is based on at least one of a cosine distance and Euclidean distance between the input face image and enrolled images.

Preferably, the similarity score is determined based on the determined at least one feature vector of the input face image and feature vectors of the enrolled face images.

Preferably, the second convolutional neural network is a trained convolutional neural network. The second convolutional neural network is preferably trained by, in a training mode, feeding good quality training face images to the second convolutional neural network and setting a corresponding ground truth to 1, and feeding bad quality training face image to the second convolutional neural network and setting a corresponding ground truth to 0. Note that although ground truths of 1 and 0 are suggested for good quality training face images and bad quality training face images, respectively, it is clear to the skilled person that any other good quality ground truth and bad quality ground truth can be applied to yield similar results.

Feeding good quality training face images to the second convolutional neural network preferably comprises performing a feature extraction of the respective good quality training face image based on the first convolutional neural network. Likewise, feeding bad quality training face images to the second convolutional neural network preferably comprises performing a feature extraction of the respective bad quality training face image based on the first convolutional neural network.

Preferably, good quality training face images and/or bad quality training face images are determined by performing a feature extraction of a candidate training image based on the first convolutional neural network to determine at least one candidate feature vector. After feature extraction a comparison score is determined by performing a feature comparison based on the determined at least one candidate feature vector and feature vectors of selected optimal face images. Further, if the determined comparison score is maximal for the corresponding enrolled face image, it is determined that the candidate training image is a good quality training face image. On the other hand, if the determined comparison score is maximal for an enrolled face image other than the corresponding enrolled face image, it is determined that the candidate training image is a bad quality training face image. Please note for example, a manual selection is executed, wherein for each person/subject, a so called optimal face image is selected from a plurality of face images. Preferably, the optimal face image is selected based on any one of the following criteria or combinations thereof: frontal pose, high resolution, neutral expression, good lighting, homogeneous illumination, little or no occlusion or obstruction. n the convention of face recognition applications, the enrolled face images should be as much as possible free from "challenges". Alternatively, or in addition to a manual selection of optimal face image to be enrolled, optimal face images can be selected in other ways as well. For example, the deep features of faces from the same identity can be clustered and the face that is situated most closely to the cluster center may be selected as the enrolled face. Typically images with a substantially frontally position face, with a neutral expression and/or ideal illumination are positioned closely to the center of such identity cluster.

According to a second aspect of the present invention there is provided a quality check system configured to determine a recognition quality of an input face image, wherein the recognition quality is representative for a probability that a face in the input face image will be correctly recognized during identity recognition. The quality check system comprises a feature extraction module configured to determine at least one feature vector of the input face image by performing a feature extraction of the input face image based on a first convolutional neural network. The quality check system further comprises a quality determination module configured to determine a recognition quality of the input image based on the determined at least one feature vector and a second convolutional neural network. The quality check system further comprises a recognition determination module configured to determine whether or not to perform identity recognition of the input face image based on the determined recognition quality and a predefined quality threshold. The quality check system also comprises an identity recognition module configured to perform identity recognition of the input face image based on the determined at least one feature vector, if it is determined to perform identity recognition.

It will be understood by the skilled person that the features and advantages disclosed hereinabove with respect to embodiments of the quality check method may also apply, *mutatis mutandis*, to embodiments of the quality check system.

Preferably, the recognition determination module is configured to determine to perform identity recognition of the input image if the determined recognition quality is equal to or higher than the predefined quality threshold, and to determine not to perform identity recognition of the input image if the determined recognition quality is lower than the predefined quality threshold.

Preferably, the identity recognition module is configured to determine a similarity score which is representative for a similarity between the input face image and enrolled face images.

Preferably, the identity recognition module is configured to determine the similarity score based on at least one of a cosine distance and Euclidean distance between the input image and enrolled images.

Preferably, the quality determination module is a trained module. More preferably, the second convolutional neural network is trained by performing following steps in a training mode of the second convolutional neural network. Feeding good quality training face images to the second convolutional neural network and setting a corresponding ground truth to 1, and feeding bad quality training face images to the second convolutional neural network and setting a corresponding ground truth to 0.

Preferably, feeding good quality training face images to the second convolutional neural network comprises performing a feature extraction of the respective good quality training face image based on the first convolutional neural network, and feeding bad quality training face images to the second convolutional neural network comprises performing a feature extraction of the respective bad quality training face image based on the first convolutional neural network.

Preferably, good quality training face images and/or bad quality training face images are determined by performing a feature extraction of a candidate training image based on the first convolutional neural network to determine at least one candidate feature vector. After feature extraction a comparison score is determined by performing a feature comparison based on the determined at least one candidate feature vector and feature vectors of selected optimal face images. Further, if the determined comparison score is maximal for the corresponding enrolled face image, it is determined that the candidate training image is a good quality training face image. On the other hand, if the determined comparison score is maximal for an enrolled face image other than the corresponding enrolled face image, it is determined that the candidate training image is a bad quality training face image. Please note that the wording corresponding enrolled face image refers to a face image which has been selected as an optimal face image and which has the same identity, as the candidate training image. In other words, it is checked whether the candidate training image of a particular person is matched with the enrolled face image of that particular person.

According to yet another aspect of the present invention, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the quality check method may also apply, *mutatis mutandis*, to embodiments of the computer program product.

According to yet another aspect of the present invention, there is provided a digital storage medium encoding a computer-executable program of instructions to perform, when executed on a computer, the steps of the method of any one of the method embodiments described above.

It will be understood by the skilled person that the features and advantages disclosed hereinabove with respect to embodiments of the quality check method may also apply, *mutatis mutandis*, to embodiments of the digital storage medium.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

### Brief description of the figures

The accompanying drawings are used to illustrate presently preferred non-limiting exemplary embodiments of detection methods of the present invention. The above and other advantages of the features and objects of the present invention will become more apparent and the present invention will be better understood from the following detailed description when read in conjunction with the accompanying drawings, in which:
Figures 1A and 1B illustrate identified problems underlying conventional quality checks for facial recognition;
Figure 2 schematically illustrates a computer-implemented quality check method according to the invention;
Figures 3A and 3B schematically illustrate visualisations of the steps of the quality check method as illustrated in figure 2 for two different input images;
Figure 4 schematically illustrates the general concept of feature extraction;
Figure 5 schematically illustrates a process of training the second convolutional neural network;
Figures 6A and 6B schematically illustrate the preparation of training images to be used in the training process as illustrated in figure 5;
Figure 7 schematically illustrates the architecture of a preferred quality determination module according to the invention; and
Figure 8 schematically illustrates a further developed computer-implemented quality check method according to the invention.

### Description of embodiments

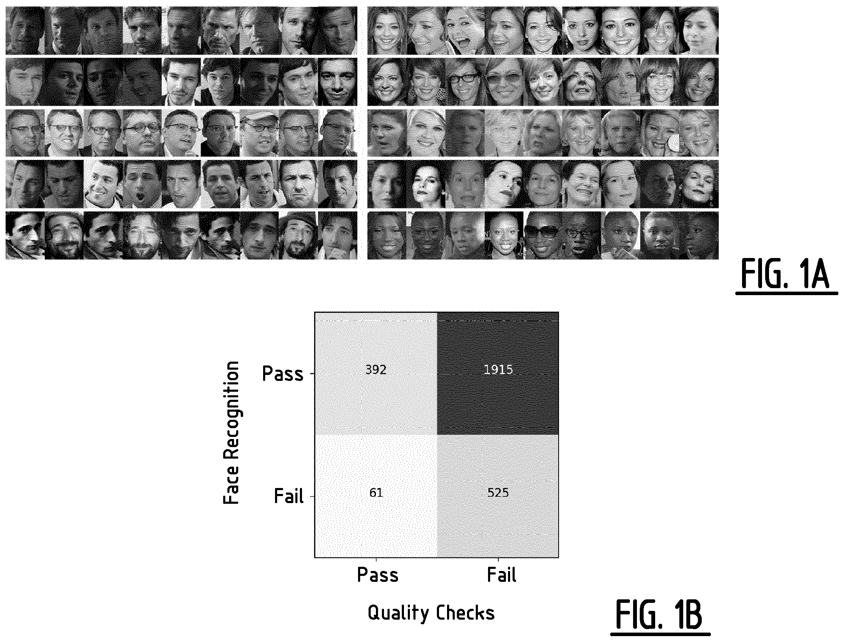

As described in the background above, there are several drawbacks to conventional quality check methods. An underlying problem is that in developing these quality checks it is assumed that the challenges for face recognition in automated methods should be similar to the challenges in nature or in real life. The applicant has found that this approach is subjective and suboptimal because face images which fail the conventional quality check may still be correctly recognized. In other words, there is a high possibility that a face image may fail one or more quality checks and yet still is successfully recognized by a face recognition system or method.
To further illustrate this problem, in figure 1A face image examples are shown which have failed a general prior art quality check but would still have been correctly recognized by a face recognition system, e.g. a deep-learning-based face recognition system. However, in conventional methods, if a face image fails the quality check, it automatically fails the facial recognition, even though facial recognition is not executed for that face image. In an attempt to quantify how many face images fail the face recognition simply because they fail the quality check, an experiment has been conducted wherein the first twenty subjects from the publically available Face Scrub dataset have been processed. More in particular, the experiment has been conducted using 2893 test images corresponding to 20 enrolled images. The applied quality checks included face detection score, size of the detected face in pixels, completeness of the detected face in the image, pose, sharpness, overexposure, and color of the detected face.

The results of the experiment are shown in figure 1B. On the horizontal axis it is indicated whether the face images have passed or failed the quality check. On the vertical axis it is indicated whether the face images have passed or failed the actual face recognition. As can be seen in the upper right square of figure 1B, the majority of the test images, i.e. 1915 out of the 2893 test images have failed the quality check, while they passed the face recognition test. In other words, although according to conventional quality checks these face images do not fulfil the right quality criteria, these face images would still be correctly recognized by the face recognition system. From this it can be concluded that the results of the manually designed quality checks are far from optimal.

Furthermore, it is not easy to grade or predict the challenges that may be encountered in the face images. Some challenges or parameters such as pose variations, occlusions, and expressions in a face image can be more easily coped with, as compared with other challenges such as differences in hairstyle, resolution, and lighting. This also has a negative impact on the recognition accuracy. Moreover, it is not efficient to create a quality check for every possible adverse effect that could potentially deteriorate face recognition accuracy because this would cause a severe increase of the computational complexity of the quality check or face recognition algorithm.
Based on the above, it is clear that it is difficult, e.g. for a human operator, to determine in general which quality criteria should be fulfilled by an input face image for it to be correctly recognized or to be correctly identified as no match. In other words, it is uncertain which quality is good enough for face recognition.
Applicant proposes a quality check method which is more objective and efficient as compared to conventional quality checks. The underlying idea is that the proposed quality check method is linked with the actual face recognition algorithm and therefore does not depend on manually designed parameter checks.

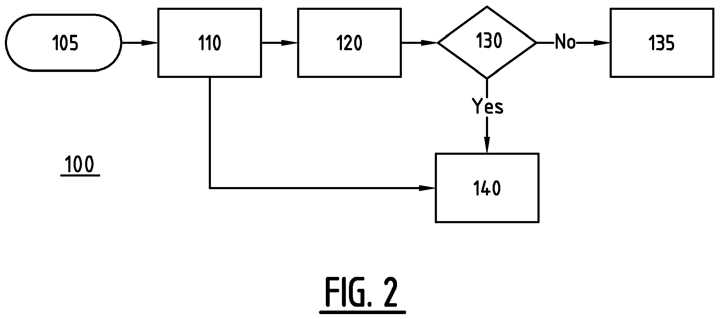

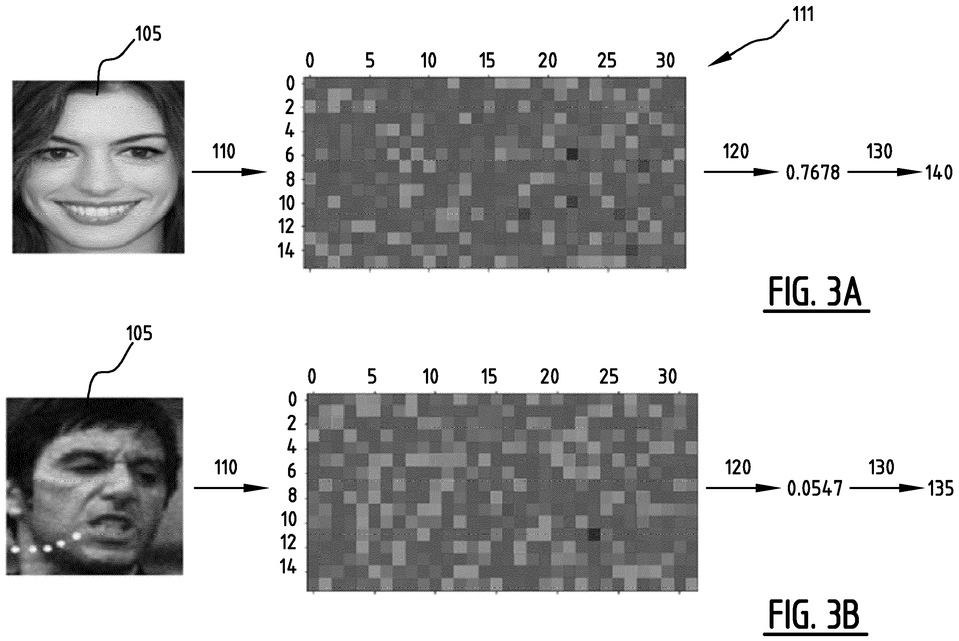

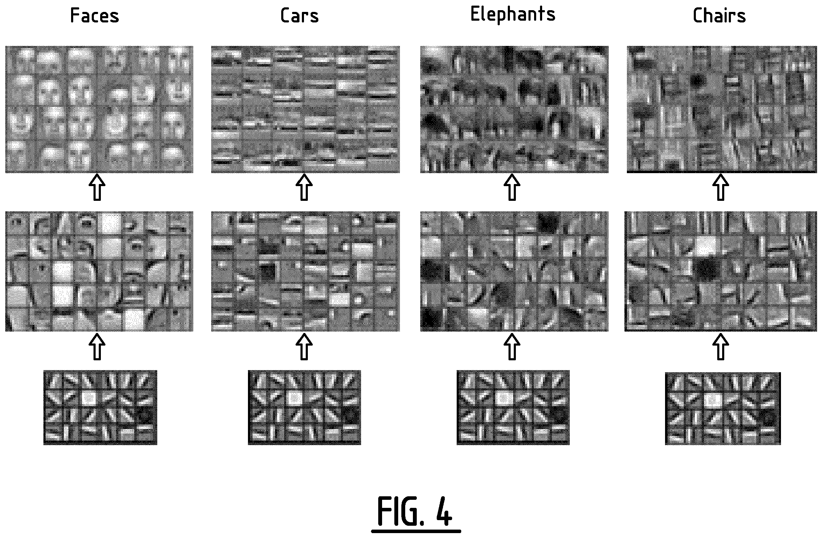

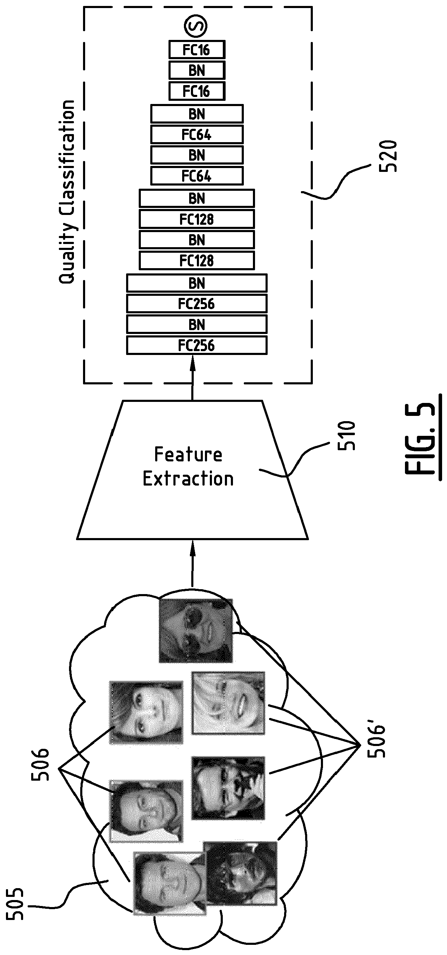

Figure 2 schematically illustrates a computer-implemented quality check method 100 according to the invention. In step 105 an input face image is provided and in step 110 feature extraction of the input face image is executed. In step 110 at least one feature vector of the input face image is determined by performing a feature extraction of the input face image. This feature extraction is based on a first convolutional neural network. It is noted that feature extraction in itself is not the object of this invention, and that the used feature extraction methods and convolutional neural networks performing the feature extraction are known to the skilled person. Nevertheless, the feature extraction step 110 is elaborated further below with reference to figure 4. By extracting one or more feature vectors from the input face image and processing the extracted feature vector(s) in stead of the full input face image, overall performance of the quality check method in terms of speed is improved as compared to conventional quality check methods. The feature vectors are provided to a second convolutional neural network which, in step 120, determines a recognition quality, also referred to as score, of the input face image. This second convolutional neural network is trained in a specific manner, such that it can determine, based on the input feature vector(s), the probability that a face in the input face image will be correctly recognized by the actual facial recognition system/method, i.e. the recognition quality. This is possible because the actual facial recognition system/method is based on the same second convolutional neural network, as will be further explained with reference to figure 5. In step 130 the determined recognition quality is compared to a predetermined quality threshold to determine whether or not to perform identity recognition. For example, if the determined recognition quality is equal to or higher than the predefined quality threshold, identity recognition of the input face image, and more in particular of the extracted feature vector(s), is performed in step 140. Preferably, step 140 comprises determining a similarity score which is representative for a similarity between the input face image and enrolled face images. Preferably the similarity score is based on at least one of a cosine distance and Euclidean distance between the input face image and enrolled images, or more in particular, the features vectors thereof. On the other hand, in this example, if the determined recognition quality is lower than the predefined quality threshold, identity recognition of the input face image is not performed, and optionally the input face image may be discarded in step 135.
The illustrated quality check method 100 assesses the quality of the face image automatically from the results of the face recognition algorithm. This is further visualized in figures 3A and 3B.

Specifically, the presented method performs the quality check at the feature space, which is spanned by the face recognition network instead of using it as an individual pre-processing step in the very beginning of face recognition. This method and corresponding system comprise three parts: the feature extraction step/module 110, the recognition quality determining step/module 120, 130, also referred to as quality classification, and the identity recognition step/module 140, also referred to as identity classification. The feature extraction 110 and quality classification 120 are based on a first and a second convolutional neural network, respectively, which are optimized based on different learning models. In figure 3A, feature extraction 110 is performed on a first input face image 105, for example a (160, 160, 3)-size image. The resulting feature vector has been resized to a matrix 111 for visualisation purposes. The feature vector 111 is used as input to determine the recognition quality in step 120. The result is a score of 0.7678 as shown in step 130 where it is compared to a predefined threshold T, which for this example was set to 0.5. In this case the score is greater than the predefined threshold T, and consequently the corresponding features are preserved for the identification classification 140. If the score is less than the predefined threshold T, as is the case in figure 3B, then the input face image is regarded as being bad quality and the image maybe discarded in step 135. To perform identity classification 140, metric-based measurements such as Cosine distance or Euclidean distance are preferably employed to obtain a similarity score which can help select the most similar face in the gallery or enrolled database for identity prediction or recognition. It is clear to the skilled person that other measurement techniques known to the skilled person can be used to compare extracted feature vectors.

The above described step 110 of feature extraction is of importance to the presented quality check method 100, since it reduces computational requirements as compared to using entire input face images for further processing. However, feature extraction in itself is not an object of this invention and the skilled person is well aware of this concept. For the sake of completeness, a brief description of feature extraction and convolutional neural networks is provided with reference to figure 4.

With the development of deep learning techniques and the publicly available large-scale face datasets, face recognition performance has boosted for several decades. The convolutional neural network (CNN) is a type of deep learning model widely used in computer vision applications. The deep CNN model is consisting of multiple stacked layers. There are three types of layers in a CNN: convolutional layer, pooling layer, and fully connected layer. The convolutional layer is used to learn the spatial structure of an image. The pooling layer helps downsampling the feature map of the model to decrease the computation complexity as well as reduce the noises. The fully connected layer is used to learn global features and mapping to class labels in the classification. The filters in the convolutional layer and fully connected layer are the weights of the CNN model which are learned by the loss function in a supervised manner.

Figure 4 shows four objects, i.e. faces, cars, elephants, and chairs, and how their hierarchical features are learned by the deep CNN model from bottom to top. When looking at the faces as an example, the first (bottom) layers intend to learn basic feature detection filters that can detect edges or corners at different positions and orientations in the image. The middle layers normally learn filters that detect parts of the object. For faces, they learn to respond to eye, nose, chins, etc., which can be picked up by the top layer to generate faces. The last (top) layers learn discriminative features or representations, i.e. learn to recognize the identity of the person under different conditions.

The applicant takes advantage of the capacity of the deep CNN to train on the extensive face datasets for feature extraction. The representation is trained to preserve the discriminative ability of the faces and to make it less sensitive to the challenges such as occlusions, varying illumination, pose variations, and expressions encountered in real-world face recognition applications. Once the training procedure is completed, the training model excluding the fully connected layers is regarded as the feature extraction module, which is used during the feature extraction step. Given an input face image, the representation as a feature vector can be used for the identity classification if this feature vector passes the quality check executed by the quality classification module during the quality classification step.

It will be clear to the skilled person that, although the feature extraction module, and training of the corresponding first convolutional neural network is described in detail, many different approaches or adaptations to the described approach can be applied to yield similar results. In a particular example, inception-Resnet-v1 is used for feature extraction in the described face recognition applications. The vggface2 dataset, which contains 8631 classes and 3,31 million images in total is used for training. During the test, the final softmax layer, i.e. fully connected layer is discarded, and the output of the bottleneck layer is used for feature extraction. The dimension of deep features from inception-Resnet-vl is 512. The training details, including hyperparameter settings are listed below:
- The size of the input image Img: 160x160x3
- Image preprocessing: fixed image standardization, Img = (Img-127.5)/128
- Base learning rate: 0.05
- Learning rate decay: After 100 epochs, learning rate=0.005; After 200 epochs, learning rate=0.0005, When epochs=301, stop training
- Optimizer: Adam
- Dropout keep probability: 0.6
- Data Augmentation: random flip
- Batch size: 90

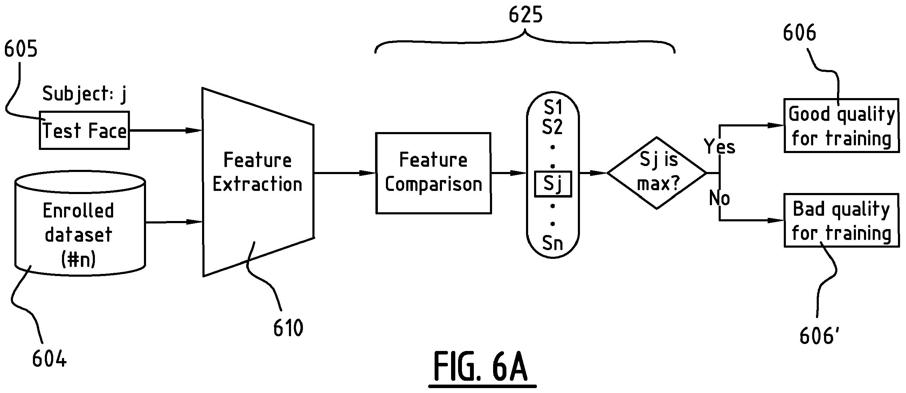

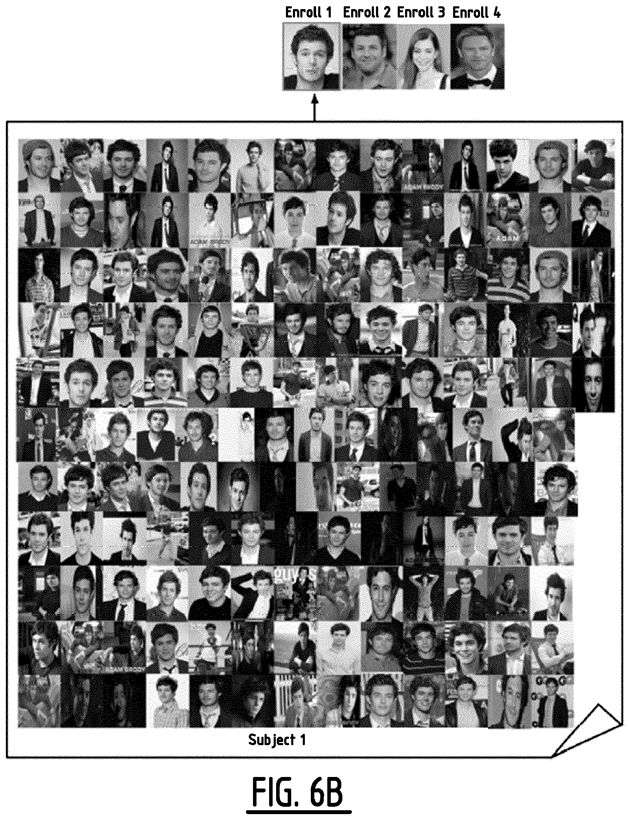

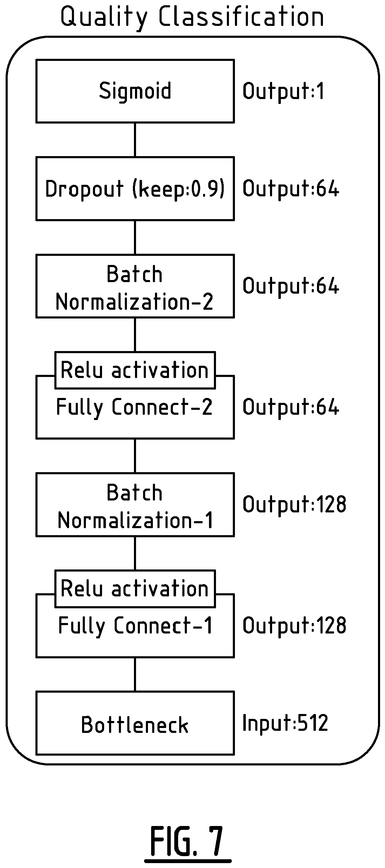

Referring to figure 5, preferably the second convolutional neural network 520 is trained by performing following steps in a training mode of the second convolutional neural network 520:
- feeding good quality training face images 506 to the second convolutional neural network 520 and setting a corresponding ground truth to 1; and
- feeding bad quality training face images 506' to the second convolutional neural network 520 and setting a corresponding ground truth to 0. Defining the good quality training face images 506 and the bad quality training face images 506' is carefully done before the training process, as will be further elaborated with reference to figures 6A and 6B. During training of the second convolutional neural network the extracted feature vectors go through different layers of the second convolutional neural network 520 to yield a score S. This score is than compared with the corresponding ground truth in order to train the second convolutional neural network 520 for quality classification. Although ground truths of 1 and 0 are suggested for good quality training face images and bad quality training face images, respectively, it is clear to the skilled person that any other good quality ground truth and bad quality ground truth can be applied to yield similar results. A preferred example of the second convolutional neural network 520 is illustrated in more detail in figure 7.

Preferably, feeding good quality training face images 506 to the second convolutional neural network 520 comprises performing a feature extraction 510 of the respective good quality training face image 506 based on the first convolutional neural network 110. Preferably, feeding bad quality training face images 506' to the second convolutional neural network 520 comprises performing a feature extraction 510 of the respective bad quality training face image 506' based on the first convolutional neural network 110.

In detail, figure 5 shows an example of a quality classification procedure for training. The input faces 506 are good quality images, whereas input faces 506' are bad quality images. The feature extraction module can be part of any face recognition algorithm. One possible exemplary embodiment of a quality classification architecture is shown in the dashed box which takes the facial features, i.e. feature vector(s), as the input and outputs the recognition quality, also referred to as quality score S. During training, preferably the ground truth of scores is set to 0 and 1 corresponding to bad quality and good quality, respectively.

Figures 6A and 6B illustrate the preparation of training images, i.e. good quality training face images 506 and feeding bad quality training face images 506' for use in the training process as illustrated in figure 5. As can be seen in figure 6A good quality training face images and/or bad quality training face images are determined by performing a feature extraction 610 of a candidate training image indicated as test face 605 based on the first convolutional neural network to determine at least one candidate feature vector, which is then fed to the feature comparison module. Here, a comparison score S is determined by performing a feature comparison based on the determined at least one candidate feature vector and feature vectors of a dataset of enrolled face images 604. In the illustrated example, the enrolled dataset comprises n enrolled face images and a comparison score Sⱼ is calculated for each of the n enrolled face images. Preferably this dataset 604 comprises selected optimal face images as will be further elaborated in combination with figure 6B. If the determined comparison score S is maximal for the corresponding enrolled face image, i.e. an enrolled face image of a person having the same identity as the candidate training image or test face, the candidate training image is determined to be a good quality training face image 506, 606. On the other hand, if the determined comparison score S is maximal for another enrolled face image, i.e. an enrolled image from another person, the candidate training image is determined to be a bad quality training face image 506', 606'. In other words, based on the candidate feature vector and feature vectors of n selected enrolled optimal face images n distances, i.e. comparison scores, can be obtained. If the minimum distance, which thus corresponds with the largest similarity, is queried by a feature vector of an enrolled optimal face image having the same identity as the candidate feature vector, then it is determined that the candidate training image is a good quality training face image. On the other hand, if the minimum distance, is queried by a feature vector of an enrolled optimal face image belonging to a different identity as the candidate feature vector, then it is determined that the candidate training image is a bad quality training face image.
To take advantage of the signs in terms of good quality or bad quality from the face recognition algorithm, the method for training data preparation as shown in figure 6A is proposed. Specifically, the faces images that fail to be recognized are defined as the bad quality training faces 606', the face images that produce the maximum similarity with the correct enrolled image are defined as the good quality training faces 606. As indicated in figure 6A, if the test face of subject j can yield the maximum similarity among the feature comparison with the n enrolled subjects, then we use this test face as good quality training data. A proposed selection process for the optimum face as the enrolled face image is illustrated in figure 6B. For example, a manual selection is executed, wherein for each person/subject, a so called optimal face image is selected from a plurality of face images. Preferably, the optimal face image is selected based on any one of the following criteria or combinations thereof: frontal pose, high resolution, neutral expression, good lighting, homogeneous illumination, little or no occlusion or obstruction. The optimal face images are used as basis or anchors to beneficially prepare training data, but they are not used as training data in a direct manner. The CNN is used to classify the test faces such that only test faces constitute the training data. In the convention of face recognition application, the enrolled face images should be as much as possible free from "challenges" such as for example also required for a mugshot or visa photos.
Alternatively, or in addition to a manual selection of optimal face image to be enrolled, optimal face images can be selected in other ways as well. For example, the deep features of faces from the same identity can be clustered and the face that is situated most closely to the cluster center may be selected as the enrolled face. Typically images with a substantially frontally position face, with a neutral expression and/or ideal illumination are positioned closely to the center of such identity cluster.

Figure 7 further illustrates the architecture of a preferred quality determination module 120, i.e. second convolutional neural network. The illustrated quality classification architecture takes feature vectors from the feature extraction module, i.e. first convolutional neural network, as input. The connected layers mainly constitute the quality classification model because the input features are flattened as 512. The Relu layer is used as the activation layer to increase the nonlinear ability of the network. The batch normalization layer makes the model converge easily by normalizing the data of every layer. The dropout layer randomly drops the learned features to reduce the risk of overfitting. The last layer outputs the quality score indicating the confidence score of the good quality used for further judgement. The proposed quality check module is apt to benefit face recognition accuracy as the quality classification is conducted based on facial features.
It will be clear to the skilled person that, although the quality classification module, and training of the corresponding second convolutional neural network is described in detail, many different approaches or adaptations to the described approach can be applied to yield similar results. The training details including hyperparameters settings are listed below for the sake of completeness:
- Training images: 500, good quality images: 250, bad quality images: 250
- Batch size: 50
- Data augmentation: rotation range=40, width shift range=0.2, height shift range=0.2, shear range=0.2, zoom range=0.2, horizontal flip,
- rescale=1./255
- Optimizer: RMSprop(lr=2e-5)
- Loss: binary cross-entropy

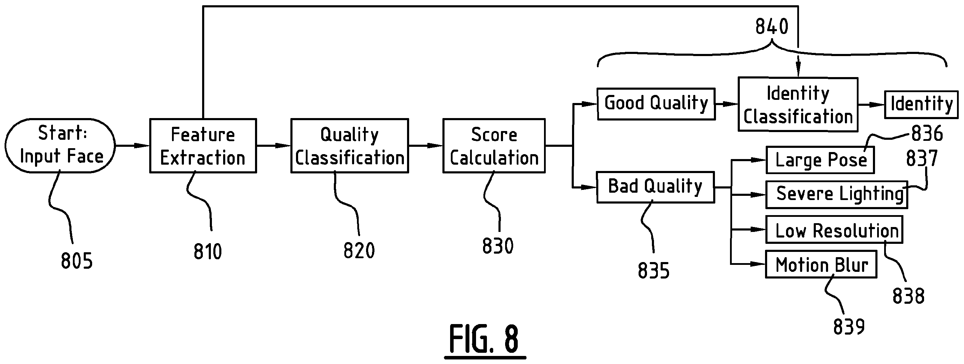

Figure 8 illustrates a further developed computer-implemented quality check method according to the invention. The illustrated method largely corresponds with the method as illustrated in figure 2, especially when the recognition quality or score is higher than the predefined quality threshold. However, when the recognition quality or score is lower than the predefined quality threshold, the illustrated method can provide information about why the quality of an input image is not high enough. More in particular, in such scenario this architecture not only provides the quality classification results 835 but also gives the clues including pose 836, lighting 837, resolution 838, blur 839, etc., for the bad quality image. In addition a score calculation module has been included which acts as a nonlinear mapping function. It is configured to map the score from the quality classification to the score with an appropriate range. To achieve this functionality of indicating the causes of an input face image yielding a bad quality, the second convolution neural network should be trained more specifically. In stead of only inputting good and bad quality images as illustrated in figure 5, the second convolutional neural network should be trained by inputting bad quality images which are labelled as pertaining to bad pose, bad lighting, low resolution, blurry, etc., respectively. In addition corresponding ground truths should be set.

A quality check method for face images has been presented that increases automated face recognition accuracy and speed. The proposed method does not explicitly define the challenges such as motion blur, pose variation, partial occlusions, low resolution, etc. In conventional methods, these challenges are programmed based on the human vision which has no verification from the face recognition method. According to the presented method face images of good quality are distinguished from that of bad quality based on the face recognition method being involved in the process of the development of the quality check method. Precisely, the architecture consists of feature extraction and quality classification in the feature vector space. The quality classification part is trained with the feature vectors of face samples that fail the automatic face recognition (negative examples, i.e. bad quality training face image) and that passed the face recognition (positive examples, i.e. good quality training face image). As a result, the proposed quality check method can automatically output a metric for the quality of the input image that is derived from the face recognition method/system itself. This increases the probability of the image being correctly recognized and hence the recognition accuracy is improved. The proposed method makes sure that quality is assessed by processing less data since only a feature vector instead of an image is processed, and thereby, in addition to the accuracy, also the speed of the quality check is increased.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

## Claims

1. Computer-implemented quality check method for determining a recognition quality of an input face image, wherein the recognition quality is representative for a probability that a face in the input face image will be correctly recognized during identity recognition, the quality check method comprising following steps:
- determining at least one feature vector of the input face image by performing a feature extraction of the input face image based on a first convolutional neural network;
- determining a recognition quality of the input image based on the determined at least one feature vector and a second convolutional neural network;
- determining whether or not to perform identity recognition of the input face image based on the determined recognition quality and a predefined quality threshold; and
- if it is determined to perform identity recognition, performing identity recognition of the input face image based on the determined at least one feature vector.

2. Quality check method according to claim 1, wherein determining whether or not to perform identity recognition of the input face image comprises:
- if the determined recognition quality is equal to or higher than the predefined quality threshold, determine to perform identity recognition of the input image; or
- if the determined recognition quality is lower than the predefined quality threshold, determine not to perform identity recognition of the input image.

3. Quality check method according to claim 1 or 2, wherein performing identity recognition of the input face image comprises determining a similarity score which is representative for a similarity between the input face image and enrolled face images.

4. Quality check method according to claim 3, wherein the similarity score is based on at least one of a cosine distance and Euclidean distance between the input face image and enrolled images.

5. Quality check method according to claim 3 or 4, wherein the similarity score is determined based on the determined at least one feature vector of the input face image and feature vectors of the enrolled face images.

6. Quality check method according to any one of the preceding claims, wherein the second convolutional neural network is trained by performing following steps in a training mode of the second convolutional neural network:
- feeding good quality training face images to the second convolutional neural network and setting a corresponding ground truth to 1; and
- feeding bad quality training face image to the second convolutional neural network and setting a corresponding ground truth to 0; and/or
wherein:
- feeding good quality training face images to the second convolutional neural network comprises performing a feature extraction of the respective good quality training face image based on the first convolutional neural network; and
- feeding bad quality training face images to the second convolutional neural network comprises performing a feature extraction of the respective bad quality training face image based on the first convolutional neural network.

7. Quality check method according to claim 6 , wherein good quality training face images and/or bad quality training face images are determined by:
- performing a feature extraction of a candidate training image based on the first convolutional neural network to determine at least one candidate feature vector;
- determining a comparison score by performing a feature comparison based on the determined at least one candidate feature vector and feature vectors of selected optimal face images; and
- if the determined comparison score is maximal for the corresponding enrolled face image, determine that the candidate training image is a good quality training face image;
- if the determined comparison score is maximal for an enrolled face image other than the corresponding enrolled face image, determine that the candidate training image is a bad quality training face image.

8. Quality check system configured to determine a recognition quality of an input face image, wherein the recognition quality is representative for a probability that a face in the input face image will be correctly recognized during identity recognition, the quality check system comprising:
- a feature extraction module configured to determine at least one feature vector of the input face image by performing a feature extraction of the input face image based on a first convolutional neural network;
- a quality determination module configured to determine a recognition quality of the input image based on the determined at least one feature vector and a second convolutional neural network;
- a recognition determination module configured to determine whether or not to perform identity recognition of the input face image based on the determined recognition quality and a predefined quality threshold; and
- an identity recognition module configured to perform identity recognition of the input face image based on the determined at least one feature vector, if it is determined to perform identity recognition.

9. Quality check system according to claim 8, wherein the recognition determination module is configured to:
- if the determined recognition quality is equal to or higher than the predefined quality threshold, determine to perform identity recognition of the input image; and
- if the determined recognition quality is lower than the predefined quality threshold, determine not to perform identity recognition of the input image.

10. Quality check system according to claim 8 or 9, wherein the identity recognition module is configured to determine a similarity score which is representative for a similarity between the input face image and enrolled face images.

11. Quality check system according to claim 10, wherein the identity recognition module is configured to determine the similarity score based on at least one of a cosine distance and Euclidean distance between the input image and enrolled images.

12. Quality check system according to claim 10 or 11, wherein the identity recognition module is configured to determine the similarity score based on the determined at least one feature vector of the input face image and feature vectors of the enrolled face images.

13. Quality check system according to any one of the preceding claims 8-12, wherein the quality determination module is a trained module wherein the second convolutional neural network is trained by performing following steps in a training mode of the second convolutional neural network:
- feeding good quality training face images to the second convolutional neural network and setting a corresponding ground truth to 1; and
- feeding bad quality training face images to the second convolutional neural network and setting a corresponding ground truth to 0; and/or
wherein:
- feeding good quality training face images to the second convolutional neural network comprises performing a feature extraction of the respective good quality training face image based on the first convolutional neural network; and
- feeding bad quality training face images to the second convolutional neural network comprises performing a feature extraction of the respective bad quality training face image based on the first convolutional neural network.

14. Quality check system according to claim 13, wherein good quality training face images and/or bad quality training face images are determined by:
- performing a feature extraction of a candidate training image based on the first convolutional neural network to determine at least one candidate feature vector;
- determining a comparison score by performing a feature comparison based on the determined at least one candidate feature vector and feature vectors of selected optimal face images; and
- if the determined comparison score is maximal for the corresponding enrolled face image, determine that the candidate training image is a good quality training face image;
- if the determined comparison score is maximal for an enrolled face image other than the corresponding enrolled face image, determine that the candidate training image is a bad quality training face image.

15. A computer program product comprising a computer-executable program of instructions for performing, when executed on a computer, the steps of the quality check method of any one of the preceding claims 1-7.
